# EUROPEAN PATENT APPLICATION

(11) **EP 0 544 947 A1**
(43) Date of publication of application: **09.06.1993**
(21) Application number: 91311099.5
(22) Date of filing: 29.11.1991
(51) Int. Cl.: F16L 25/00

(54) **Pipeline component assembly**

(71) Applicant: COOPER INDUSTRIES INC., Houston Texas 77002 (US)
(72) Inventor: Thornburrow, Edward Thomas, Leeds, West Yorkshire LS7 3DR (GB)
(74) Representative: Jackson, Peter Arthur

(57) **Abstract**

A pipeline (11) has a laterally removable valve or other component unit (10) which can be secured in position between a pair of mountings (12), each having an externally rotatable key (24), which, via an axially restrained nut (28) can advance and retract a rotatably restrained sleeve (29) which cooperates like a bolt with a socket (35) in the unit.

## Description

It is often necessary to be able to remove and install a valve, such as a gate or ball valve, a choke, a pressure transmitter, a pig launcher or other pipeline component in a pipeline, for service or replacement, without disturbing other parts of the pipeline on each side of the component. Previous solutions to this problem have involved clamping a component unit in the pipeline by means, for example, of hydraulically extendible tension bolts, or by means of screw up seal carriers. These solutions have not been entirely satisfactory because of the uncertainty in the clamping force to be applied to provide proper securing and/or sealing of the unit, the continual stress in the clamping members, the potential damage to seals carried on a rotatable seal carrier as the seals come into engagement with cooperating surfaces, and the vulnerability of sealing and other delicate parts to damage when the unit is withdrawn transversely from or reinstalled transversely into the pipeline. A further consideration is that, if the pipeline is a sub-sea pipeline, any disconnection and reconnection of the component may need to be conducted by a remotely operated vehicle (ROV) so that simple actuation must be possible with minimum torque or other force.

In accordance with the present invention, a pipeline component assembly comprises a pair of mountings which are arranged to be fixed at longitudinally spaced positions in a pipeline, and a component unit which can be installed, and removed from, between the mountings, the mountings and unit defining a passage for accommodating flow through the pipeline, and the unit being securable in the installed position by means of a pair of tubular, non-rotatable, locking sleeves which surround the passage and each of which is axially advanceable and retractable between positions in which the unit is respectively secured to and released from the respective mounting, the sleeve being advanceable and retractable by an axially restrained nut which is screw threaded onto the outside of the sleeve and is rotatable by rotation of an externally accessible rotary key.

Each key may have a stem extending substantially radially of the respective sleeve, the stem being provided at its outer end with a non-circular profile for application of a turning tool, and at its inner end with a ring of teeth projecting substantially radially from the stem and meshing with a ring of teeth projecting substantially axially from the nut. As a result the sleeves may be advanced and retracted by means of an acceptable torque applied to the outer ends of the keys, for example by a ROV, the actual torque being determined by the gearing between the keys and nuts, and the pitch of the screw threads between the nuts and sleeves.

Preferably, that end of each sleeve which leads when the sleeve is advanced is constructed to provide a rigid annular portion which rides onto engagement with a peripheral surface to secure the component unit to the respective mounting. With this arrangement, location of the unit in the pipeline is not dependent upon any clamping pressure or stress in any components, as the sleeves effectively act as sliding bolts which, when advanced, act in shear to inhibit removal of the unit.

Seals will be necessary between each side of the component unit and the mountings and, most simply, the leading end of each sleeve is arranged both to secure the unit relatively to a respective one of the mountings, and to complete a seal between the unit and that mounting. The arrangement is preferably such that the engagement between the sleeves and the complementary peripheral surfaces occurs before the respective seals are effected. This avoids damage to any delicate parts of the seal since they do not come into effect until after the unit has been accurately aligned with the mountings.

Each seal may comprise an annular deformable lip seal which rides onto a complementary substantially cylindrical sealing surface. Such seals are known and have the advantage that a predetermined sealing pressure resulting from a predetermined deformation of the lip seal can be relied upon irrespective of the exact location of the lip seal relatively to the cylindrical sealing surface in the axial direction.

Various alternative configurations are possible. Thus the sleeves and keys may be located in respective ones of the mountings, the sleeves being advanced towards one another into engagement with the component unit. Alternatively, the sleeves and keys may be located in the component unit, and advanced away from one another into engagement with the mountings. The latter has the advantage that the sleeves and associated parts are removable with the unit for servicing or replacement.

Also, when a deformable lip seal is used, it may project substantially axially of the rigid annular portion at the leading end of the respective sleeve. Alternatively, the lip seal when used may be stationary, with the substantially cylindrical sealing surface being formed on the annular portion of the respective sleeve. Whether or not the lip seals are then removable with the component unit will depend upon the location of the sleeves and whether or not the lip seals are provided on the sleeves or in stationary positions for complementary engagement with the leading end of a sleeve.

The component unit and mountings preferably have opposed surfaces at their respective interfaces and the arrangement is such that when the sleeves are retracted, the sleeves and seals do not project beyond respective ones of the interfacial surfaces. In effect this means that each sleeve will be advanceable through an opening in its respective interfacial surface, and retractible to a position flush or under flush with that surface, whereby there will be a lack of any interference as the interfacial surfaces move over one another upon removal or replacement of the unit.

Two examples with modifications, of valve assemblies constructed in accordance with the present invention are illustrated in the accompanying drawings, in which:
Fig. 1 is a side elevation;
Fig. 2 is a half axial section taken on the line II-II in Fig. 1;
Fig. 3 is an enlargement of the left-hand part of Fig. 2;
Fig. 4 is an enlargement of the right-hand part of Fig. 2;
Fig. 5 is an enlarged detail of the part indicated by the circle V in Figs. 2 and 4;
Fig. 6 is an enlarged detail of the part within the circle VI in Figs. 2 and 4;
Fig. 7 is a plan of a second example; and,
Fig. 8 is an axial section taken on the line VIII-VIII in Fig. 7.

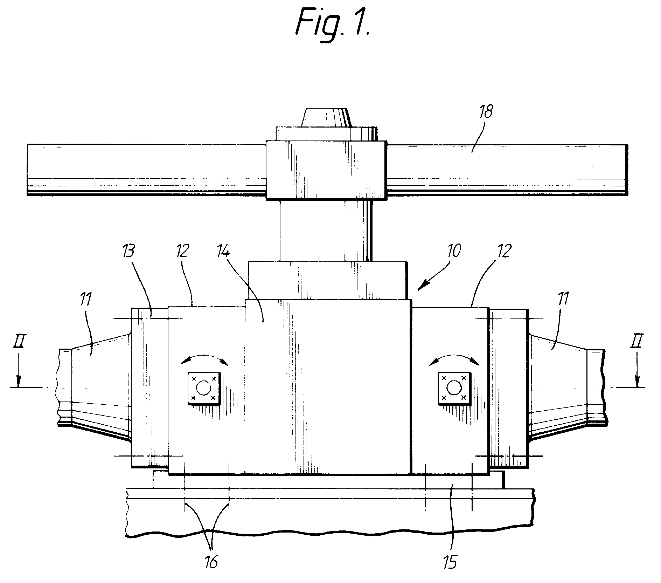

Figures 1 to 4 show a ball valve unit 10 mounted in a pipeline 11 by means of a pair of mountings 12. Each of the mountings 12 is fixed by studs 13 to flanged members 11 at the ends of two parts of the pipeline. The valve unit 10 includes a removable casing 14 which is shown in Figure 1, together with the mountings 12, resting on a base 15, to which the mountings 12 are secured by bolts 16 so as to be rigid with the base and with one another.

The casing 14 contains a ball valve closure 17 which is rotated to open and close the valve by an actuator 18. When the valve is open the two parts of the pipeline are interconnected by passages 19 through the mountings 12 and a passage 20 through the valve unit.

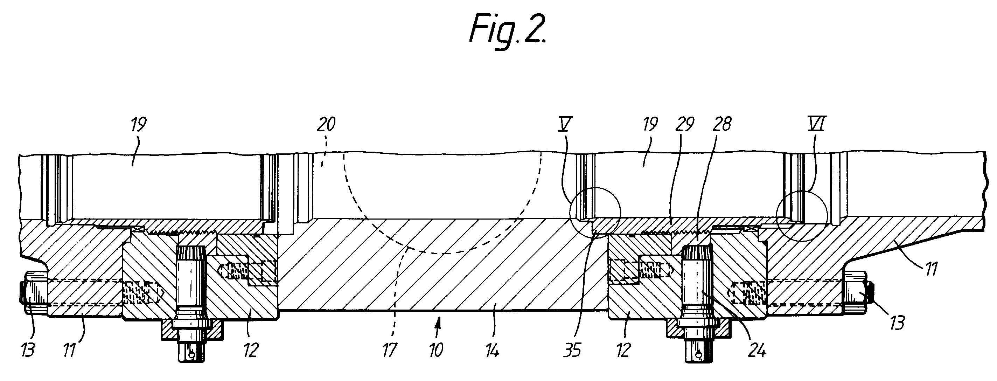

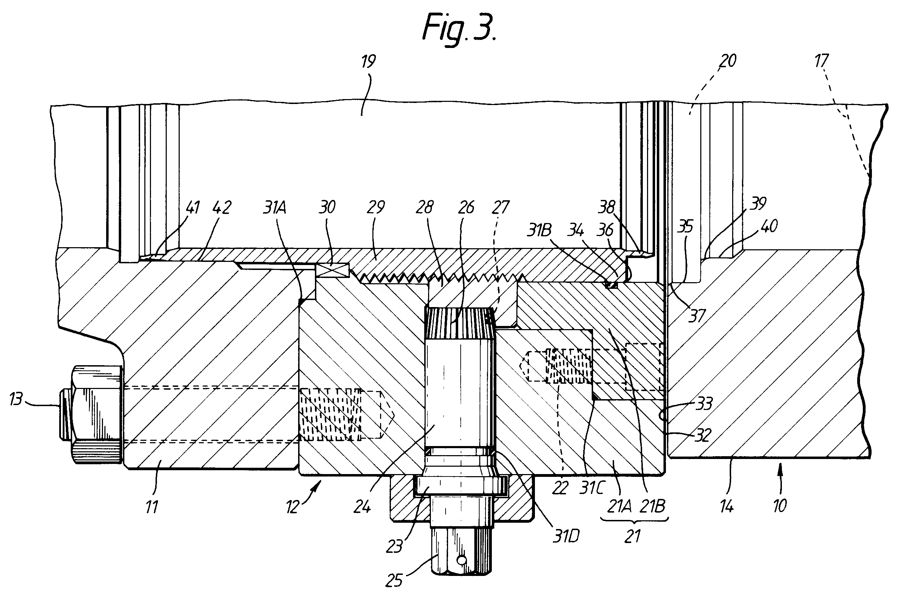

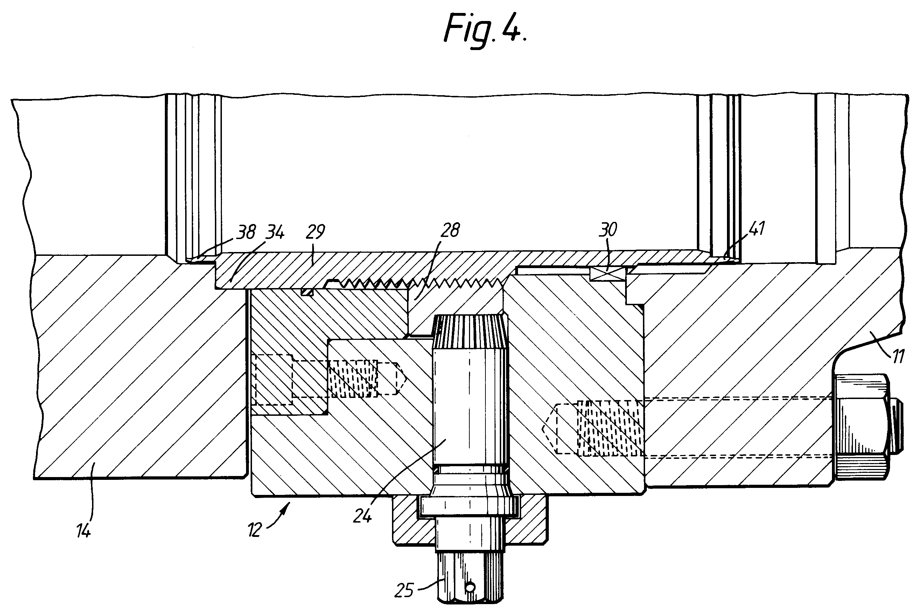

The valve unit 10 can be secured and sealed to the mountings 12 in the installed position shown in Figure 1, but released and removed for servicing or replacement by similar, mirror image mechanisms located in the mountings 12. These are shown in Figure 2 but more clearly in Figures 3 and 4. Thus each mounting 12 has an annular block 21 formed by parts 21A and 21B which are held together by means of a ring of bolts 22. Radially restrained by a collar 23 in the block part 21A is a rotary key 24 having a stem. The outer end of the stem is provided with a hexagonal head 25 for the application of a turning tool, in an exposed position outside the block 21. The inner end of the stem is provided with a ring of radially projecting gear teeth 26 which mesh with the axially projecting teeth of a contrate pinion 27 formed integrally with a nut 28. The nut is screw threaded onto a tubular sleeve 29, which is slidable axially within the block 21 but is restrained by a ring of keys 30 against rotation within the block. Each mounting is provided with elastomeric O-ring seals 31A,31B,31C and 31D for sealing the adjacent parts.

As will be readily apparent, rotation of the key 24, by means of a tool applied to the head 25, will rotate the nut 28 and hence move the sleeve 29 axially through the mounting between a retracted position shown in Figure 3 and an advanced position shown in Figure 4. In its retracted position, the sleeve is disengaged from the valve unit and indeed all parts of the sleeve are under flush with respect to an end wall surface 32 of the block 21, which opposes an end surface 33 of the casing 14 at the interface between the mounting and valve unit. With both sleeves retracted in this way, the valve unit 10 can be lifted out from between the two mountings 12.

On installation or reinstallation of the valve unit 10, it is inserted downwards or sideways between the two mountings 12 with the sleeves 29 retracted. The keys 24 are then rotated in the appropriate direction so that in each case the respective sleeve 29 is advanced beyond the end wall 32 and into engagement with the valve unit to lock the valve unit in position between the two mountings. As each sleeve 29 is advanced, a rigid annular portion 34 at the leading end of the sleeve rides onto a complementary external peripheral cylindrical engagement surface 35 within the valve unit, any initial slight misalignment being accommodated and rectified by mutual engagement of chamfers 36 and 37. The portion 34 thus acts like a sliding bolt which slides into the socket effectively formed by the surface 35 to locate the valve unit against radial movement.

Immediately after initial engagement between the portion 34 and the surface 35, a deformable lip seal 38, projecting axially from the portion 34 rides over a chamfer 39 and onto a cylindrical surface 40 stepped inwardly from the surface 35. This provides a seal between the mounting and valve unit. The trailing end of each sleeve 29 is similarly sealed to the flanged pipeline member 11 by means of a trailing lip seal 41 which rides on a cylindrical surface 42 of the flanged member 11. The fully engaged position is shown in Figure 4. All reference numerals shown in Figure 3 are not repeated in Figure 4.

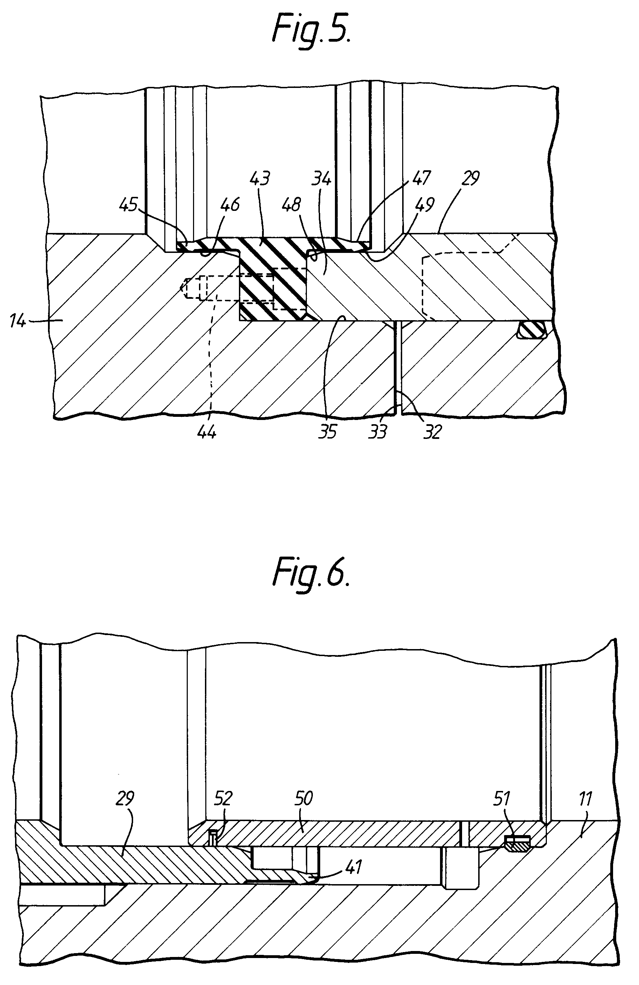

Figure 5 shows a modification of the seal effected at the leading end of each sleeve 29. Thus, instead of there being a lip seal 38 on the annular portion 34 of the sleeve, there is a T-shaped double lip seal element 43 secured by a ring of bolts 44 within the valve unit 14 and providing a first lip seal 45 which engages a cylindrical surface 46 within the valve unit. The element also provides a second lip seal 47 which, after initial engagement between the annular portion 34 and surface 35 rides over a chamfer 48 and onto a cylindrical inner peripheral sealing surface 49 on the annular portion 34. Self evidently, the sealing element 43 is removable with the valve unit.

Figure 6 shows a modification in which the lip seal 41 at the trailing end of the sleeve 29 is protected by a tubular cover 50, which is located in the flanged member 11 of the pipeline by means of a sinusoidal clip 51, and has a Fey scraper ring 52 which provides a wiping seal with the inner peripheral surface of the sleeve 29.

The seal at the trailing end of the sleeve 29 could also be formed similarly to that shown in Figure 5.

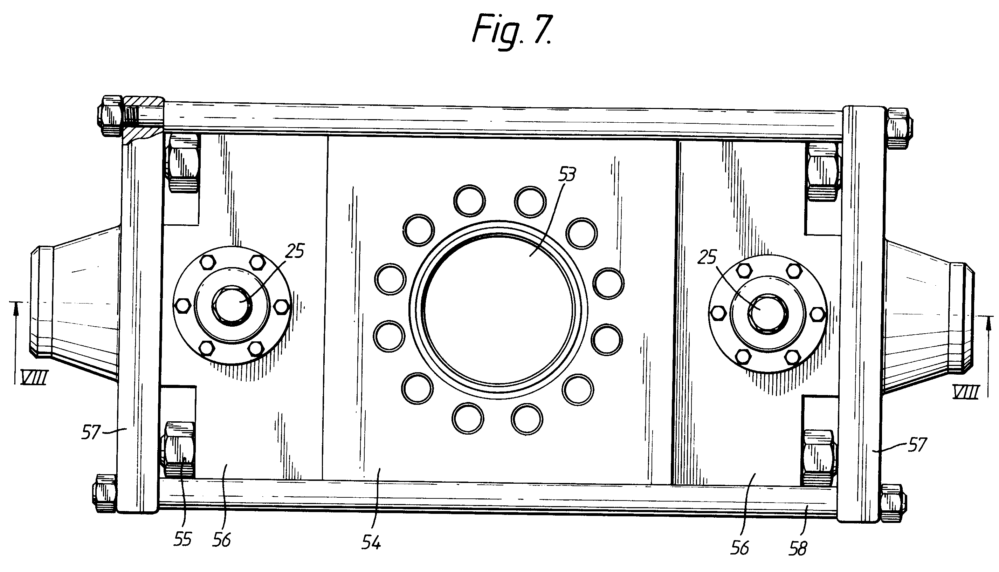

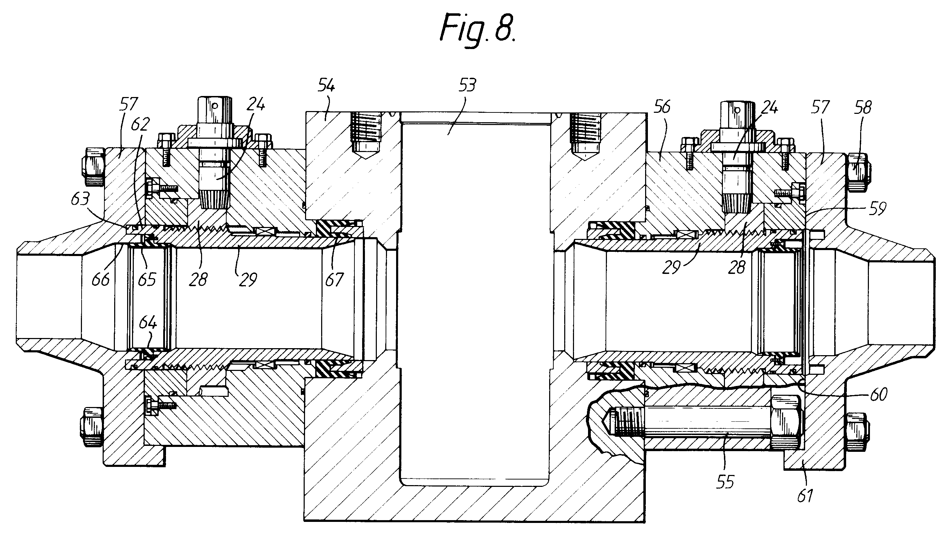

Figures 7 and 8 show a gate valve assembly in which a gate closure element works in a central portion 53 within a casing 54 under the control of a hand wheel or other conventional actuator, which is not shown. The casing 54 has bolted onto each side of it, by means of bolts 55 a pair of annular blocks 56 which house keys 24, nuts 28 and sleeves 29 in analogous manner to those in the first example. The parts thus far described are included in the removable valve unit which is to be located between flanged members 57 that are welded or otherwise secured to the pipeline parts and are rigidly interconnected by tie bolts 58. In this case the flanged members 57 form the mountings of the valve assembly.

The essential difference between the first and second examples is thus that, in the second example, the connection mechanism consisting of the sleeves 29 and keys 24, are removable with the valve mechanism components. Consequently the sleeves 29 are advanced away from one another to engage the mountings formed by the flanged members 57 and retracted towards one another for disconnection. The connected position is shown on the left-hand side in Figure 8 and the disconnected position on the right-hand side. Thus in the disconnected position each sleeve 29 is under flush with an end face 59 of the block 56 of the valve unit so that when the valve unit is lifted out, there is no danger of damage to the sleeve by the opposed face 60 of the flanged member 57 which opposes the face 59 to provide the interface between the valve unit and mounting.

To install the valve unit it is inserted and lowered until resting on projections 61 at the lower ends of the flanged members 57, to provide approximate location. The sleeves 29 are then advanced by rotating the keys 24 so that, in each case, a rigid annular portion 62 rides into a complementary annular slot 63, providing radially inner and radially outer peripheral engagement surfaces, in the manner of a sliding bolt, to locate the valve unit against radial displacement. Chamfers are provided at the leading end of the annular portion 62 and on the lead-in portions to the peripheral surfaces of the slot 63. A T-shaped double lip sealing element 64, similar to the element 43 in Figure 5, is bolted to the leading end of the sleeve 29, within the annular portion 62, and has one lip seal 65 riding over a cylindrical surface 66 of the flanged member 57 to complete a seal between the sleeve and flanged member 57. At its trailing end the radially outer cylindrical surface of the sleeve 29 rubs against a lip seal 67 to maintain a seal at all times between the sleeve and valve unit. Other elastomeric O-ring seals are shown where appropriate.

In this second example, all movable parts of the connection mechanism, and all seals are removable with the valve unit for maintenance.

## Claims

1. A pipeline component assembly comprising a pair of mountings (12,56) which are arranged to be fixed at longitudinally spaced positions in a pipeline, and a component unit (10; 53,55) which can be installed, and removed from, between the mountings, the mountings and unit defining a passage for accommodating flow through the pipeline, and the unit being securable in the installed position by means of a pair of tubular, non-rotatable, locking sleeves (29) which surround the passage and each of which is axially advanceable and retractable between positions in which the unit is respectively secured to and released from the respective mounting, the sleeve being advanceable and retractable by an axially restrained nut (28) which is screw threaded onto the outside of the sleeve and is rotatable by rotation of an externally accessible rotary key (24).

2. An assembly according to claim 1, in which each key (24) has a stem extending substantially radially of the respective sleeve, the stem being provided at its outer end with a non-circular profile (25) for application of a turning tool, and at its inner end with a ring of teeth (26) projecting substantially radially from the stem and meshing with a ring of teeth projecting substantially axially from the nut.

3. An assembly according to claim 1 or claim 2, in which that end of each sleeve which leads when the sleeve is advanced is constructed to provide a rigid annular portion (34,62) which rides onto engagement with a peripheral surface (35,63) to secure the component unit to the respective mounting.

4. An assembly according to claim 3, in which at least one of the annular portion and peripheral surface has a chamfered lead-in (36,37) to facilitate alignment between the component unit and respective mounting.

5. An assembly according to claim 3 or claim 4, in which the leading end of the sleeve is arranged both to secure the component unit relatively to a respective one of the mountings, and to complete a seal between the unit and that mounting.

6. An assembly according to claim 5, in which the engagement occurs before the seal is effected.

7. An assembly according to claim 5 or claim 6, in which the seal comprises an annular deformable lip seal (38,47) which rides onto a complementary substantially cylindrical sealing surface (40,49).

8. An assembly according to claim 7, in which the lip seal (38) projects substantially axially of the annular portion (34).

9. An assembly according to claim 7, in which the lip seal (45) is stationary and the substantially cylindrical sealing surface (47) is formed on the annular portion (34).

10. An assembly according to any one of claims 5 to 9, in which the component unit and the mountings have opposed surfaces (32,33; 59,60) at their respective interfaces and when the sleeves are retracted, the sleeves and seals do not project beyond respective ones of the interfacial surfaces.

11. An assembly according to any one of the preceding claims, in which the sleeves (29) and keys (24) are located in respective ones of the mountings (12).

12. An assembly according to any one of claims 1 to 10, in which the sleeves (29) and keys (24) are located in the component unit (56).
